# EUROPÄISCHE PATENTSCHRIFT

(11) **EP 1 250 208 B1**
(45) Veröffentlichungstag und Bekanntmachung des Hinweises auf die Patenterteilung: **06.10.2004**
(21) Anmeldenummer: 01911370.3
(22) Anmeldetag: 18.01.2001
(51) Int. Cl.: B23K 1/00

(54) **VERFAHREN ZUR VERBINDUNG VON STAHLROHREN MIT ALUMINIUMRIPPEN**
METHOD OF LINKING STEEL TUBES WITH ALUMINUM RIBS
PROCEDE DE LIAISON DE CONDUITES EN ACIER ET DE NERVURES EN ALUMINIUM

(30) Priorität: 28.01.2000 DE 10003874; 17.11.2000 DE 10057180
(43) Veröffentlichungstag der Anmeldung: 23.10.2002
(73) Patentinhaber: GEA Energietechnik GmbH, 44809 Bochum (DE)
(72) Erfinder: KORISCHEM, Benedict, 40489 Düsseldorf (DE); DINULESCU, Horia, Minnetonka, MN 55305 (US); WITTE, Raimund, 44319 Dortmund (DE); VOLKMER, Eckard, 40880 Ratingen (DE)
(74) Vertreter: Bockermann, Rolf, Dipl.-Ing.
(86) Internationale Anmeldenummer: PCT/DE2001/000223
(87) Internationale Veröffentlichungsnummer: WO 2001/054840

(56) Entgegenhaltungen:
- EP-A- 0 785 045
- EP-A- 0 845 321
- EP-A- 0 965 411
- US-A- 2 650 420
- US-A- 5 042 574
- US-A- 5 617 992
- PATENT ABSTRACTS OF JAPAN vol. 008, no. 191 (M-322), 4. September 1984 (1984-09-04) & JP 59 082114 A (SHOWA ALUM CORP), 12. Mai 1984 (1984-05-12)

## Beschreibung

Die Erfindung betrifft ein Verfahren zur Verbindung von wellenförmig gefalteten Rippenbändern aus Aluminium mit den Flachseiten von Flachrohren aus Stahl gemäß den Merkmalen im Oberbegriff des Patentanspruchs.

In diesem Zusammenhang ist es durch die US-PS 5,042,574 bekannt, mit Aluminium plattierte Flachrohre mit Hilfe von Aluminium-Sitizium-Lot mit wellenförmig gefalteten Aluminium-Rippenbahnen in einem Temperierofen zu verbinden. Die Verbindung von Aluminium-Rippenbahnen mit Flachrohren aus Stahl durch Verlötung mit Aluminium-Silizium-Lot, welches Bestandteil der

Aluminium-Rippen oder der Flachrohre ist, hat den Nachteil, dass eine solche Verlötung nur über den Umweg von mit Aluminium plattierten Flachrohren bzw. von plattierten Aluminium-Rippen hergestellt werden kann. Neben dem vergleichsweise hohen Aufwand durch die Bereitstellung der diversen Vormaterialien und bei der Herstellung ist außerdem der Nachteil gegeben, dass die durch mindestens eine Längsschweißnaht umfangsseitig geschlossenen Flachrohre in der Schweißzone nicht mit Aluminium plattiert sein dürfen. Ansonsten kann keine einwandfreie Schweißung gewährleistet werden. Diese Bereiche der Flachrohre müssen nachträglich erst von Schweißnebenprodukten befreit und danach korrosionstechnisch geschützt werden.

Ein weiterer Nachteil von aus Flachrohren aus Stahl mit gefalteten Aluminium-Rippenbändem bestehenden Rippenrohren wird darin gesehen, dass die Verlötung der mit Aluminium plattierten Flachrohre mit Rippenbändem bei vergleichsweise hohen Temperaturen in einer Größenordnung von etwa 600°C, also nahe der Erweichungstemperatur von Aluminium stattfinden muss. Das hierbei erforderliche Lot besteht aus etwas unter dem Erweichungspunkt von Aluminium schmelzendem Aluminium-Silizium-Eutektikum.

Bezüglich dieser Bauart ist festzustellen, dass aufgrund der unterschiedlichen Temperaturausdehnungskoeffizienten von Aluminium und Stahl sich nach dem Löten bei etwa 600°C beim Abkühlen auf die Umgebungstemperatur (Raumtemperatur) die beiden verlöteten Materialien stark gegeneinander verziehen können und es dabei leicht zu einem Aufbrechen der Verlötungen kommen kann, wenn das Aluminium nicht einwandfrei aufgebracht wurde.

In der JP 590 82 114 A wird ein Verfahren zum Aufbringen einer Aluminium-Rippenwendel auf ein Stahlrohr beschrieben, bei welchem eine wässrige Zinn-Chlorid/Zink-Chlorid-Lösung zur Verlötung verwendet wird.

Die EP 0 845 321 A1 offenbart die spezielle Lehre, Teile aus Aluminium-Druckguss durch Löten zu fügen. Bei diesem Fügevorgang wird unter anderem auch Cäsium-Aluminium-Tetrafluorid als Flussmittel eingesetzt.

Der Erfindung light - ausgehend vom Stand der Technik - die Aufgabe zugrunde, ein Verfahren zur Verbindung von wellenförmig gefalteteten Rippenbändem aus Aluminium mit den Flachseiten von Flachrohren aus Stahl als Bestandteile von luftgekühlten Anlagen und luftgekühlten Kondensatoren bereit stellen, das sowohl mit geringen Lohn- und Energiekosten als auch mit Kosteneinsparungen im Materialeinsatz durchgeführt werden kann.

Diese Aufgabe wird nach der Erfindung mit den im kennzeichnenden Teil des Patentanspruchs angegebenen Merkmalen gelöst.

Ein Aspekt der Erfindung besteht darin, ein Lötmittel aus einer Zink-Aluminium-Legierung mit einem Aluminium-Bestandteil von 0,5% - 20%, bevorzugt 5% - 15%, einzusetzen, das auf die Flachseiten der Flachrohre aus Stahl gebracht wird. Das Aufbringen der Lötmitteischicht kann mit Hilfe des Flammspritzverfahrens erfolgen. Hierbei ist es möglich, Acytelen oder auch Erdgas zu verwenden. Dazu wird ein Draht mit der Zusammensetzung des Lötmittels aufgeschmolzen und aufgrund des Drucks, unter dem das Gas steht, gleichmäßig auf die jeweilige Oberfläche verteilt.

Eine weitere Vorgehensweise besteht im Einsatz des Lichtbogenverfahrens. In diesem Fall wird mittels zwei Drähten mit der Zusammensetzung des Lötmittels ein Lichtbogen gezogen und es werden dabei die Drähte geschmolzen. Gleichzeitig wird mit Luft oder mit einem inerten Gas angeblasen, so dass hierdurch das geschmolzene Lötmittel gleichmäßig auf die Flachseiten der Flachrohre verteilt wird.

Auch eine Galvanisierung mit dem Lötmittel in der erwähnten Zusammensetzung ist denkbar.

Schließlich ist es noch vorstellbar, dass eine Schicht aus dem erfindungsgemäß zusammengesetzten Lötmittel durch Druck, Plattieren oder Sintern auf die Flachseiten der Flachrohre aufgebracht werden kann.

Ganz wesentlich am erfindungsgemäßen Verfahren ist die Erkenntnis, dass durch die Verwendung eines Flussmittels in Form von Cäsium-Aluminium-Tetrafluorid es jetzt möglich ist, die Löttemperatur von bislang etwa 600°C auf einen Bereich zwischen 370°C und 470°C zu reduzieren. Diese Absenkung der Löttemperatur ist nicht nur mit einer Senkung der Lötzeiten um etwa 30% - 40% verbunden, sondern führt auch zu einer erheblichen Einsparungen bei den Lohn- und Energiekosten. Diese Einsparung macht sich insbesondere dadurch bemerkbar, dass erfindungsgemäß nur die Berührungszonen der Rippenbänder mit den Flachrohren mit dem Flussmittel benetzt werden. Das Aufbringen kann durch Tauchen oder auch Sprühen erfolgen.

Des Weiteren ist im Rahmen der Erfindung zu berücksichtigen, dass bei der herkömmlichen Lötung die Rippenbänder weich geglüht wurden. Hierdurch verlieren sie zwangsläufig einen Teil ihrer Festigkeitseigenschaften. Bei Flachrohren aus Stahl mit zwischen den Flachseiten integrierten Rippenbändem aus Aluminium wurde dies bislang noch toleriert, da die Rippenbänder nach der Lötung zwischen den Flachseiten der Flachrohre eingebunden sind. Im Rahmen des erfindungsgemäßen Verfahrens ist jedoch durch die deutliche Absenkung der Löttemperatur gewährleistet, dass kein Weichglühen mehr stattfindet. Die Rippenbänder behalten somit ihre vollen Festigkeitseigenschaften bei.

Nach dem Löten im Ofen wird anschließend die jeweils zusammengefügte Anordnung aus Flachrohren und Rippenbändern der Umgebungstemperatur (Raumtemperatur) ausgesetzt und dadurch gekühlt, so dass die Rippenbänder mit den Flachrohren einwandfrei wärmeleitend verbunden werden.

Das spezielle Lötmittel aus einer Zink-Aluminium-Legierung mit einem Aluminium-Bestandteil von 0,5% - 20%, bevorzugt 5% - 15%, in Verbindung mit dem ebenfalls speziellen Flussmittel in Form von Cäsium-Aluminium-Tetrafluorid, erlaubt es also, bei der jeweils vorteilhaften Temperatur zwischen 370°C und 470°C die Lötmittelschicht so aufzuschmelzen, dass auf keinen Fall das Aluminium der Rippenbänder mit aufgeschmolzen wird. In diesem Zusammenhang ist die treibende Kraft das Eutektikum Zink/Aluminium, wobei in der Lötmittelschicht Aluminium legiert ist, damit das flüssige Zink nicht das Aluminium der Rippenbänder auflöst.

Das besondere Flussmittel in Form von Cäsium-Aluminium-Tetrafluorid kann auf basischer, saurer oder neutraler Basis bereit gestellt werden.

Die jeweilige Löttemperatur ist von dem Anteil des Aluminiums in dem Lötmittel abhängig. Je höher der Aluminium-Anteil ist, desto höher ist auch die Löttemperatur. Eine vorteilhafte Ausführungsform ist dann gegeben, wenn das Lötmittel einen Anteil von 15% Aluminium hat, wobei dann die Löttemperatur bei ca. 430°C liegt.

## Patentansprüche

1. Verfahren zur Verbindung von wellenförmig gefalteten Rippenbändern aus Aluminium mit den Flachseiten von Flachrohren aus Stahl, **dadurch gekennzeichnet, dass** auf die Flachseiten der Flachrohre eine Lötmittelschicht aus einer Zink-Aluminium-Legierung mit einem Aluminiumbestandteil von 0,5 % bis 20 % und auf die Berührungszonen der Rippenbänder mit den Flachseiten ein Flussmittel in Form von Cäsium-Aluminium-Tetrafluorid bei Raumtemperatur aufgebracht werden, worauf die Rippenbänder mit den Flachseiten in mechanischen Kontakt gebracht, dann in dieser Konfiguration in einem Ofen auf eine Löttemperatur zwischen 370°C und 470°C erwärmt und letztlich zur Abkühlung der Raumtemperatur ausgesetzt werden.

## Claims

1. A method of connecting aluminium rib strips folded so as to be corrugated, to the flat sides of flat steel tubes, **characterised in that** a layer of soldering agent consisting of a zinc-aluminium alloy with an aluminium content of 0.5% to 20% is applied to the flat sides of the flat tubes and a fluxing agent in the form of caesium aluminium tetrafluoride is applied to the contact zones of the rib strips with the flat sides, the application being carried out at room temperature, whereupon the rib strips are brought into mechanical contact with the flat sides and then, **in that** configuration, are heated in a furnace to a soldering temperature between 370°C and 470°C, and are finally exposed to room temperature for cooling.

## Revendications

1. Procédé pour la liaison de bandes de nervures pliées de façon ondulée en aluminium avec les côtés plats de tubes plats en acier,
**caractérisé en ce que** sur les côtés plats des tubes plats est appliquée une couche d'agent de brasage en alliage zinc-aluminium avec un composant aluminium de 0,5% à 20% et sur les zones de contact des bandes de nervures avec les côtés plats est appliqué un agent fluide sous forme de césium-aluminium-tétrafluorure à température ambiante, les bandes de nervures avec les côtés plats étant mises en contact mécanique, puis sont chauffées dans cette configuration dans un four à une température de brasage entre 370°C et 470°C, et enfin exposées à un refroidissement à la température ambiante.
